# EUROPEAN PATENT APPLICATION

(11) **EP 4 224 763 A1**
(43) Date of publication of application: **09.08.2023**
(21) Application number: 20958356.6
(22) Date of filing: 23.10.2020
(51) Int. Cl.: H04L 5/00, H04W 72/04

(54) **BEAM MANAGEMENT METHOD AND COMMUNICATION DEVICE**

(71) Applicant: Huawei Technologies Co., Ltd., Shenzhen, Guangdong 518129 (CN)
(72) Inventor: LIU, Fengwei, Shenzhen, Guangdong 518129 (CN)
(74) Representative: Huawei European IPR
(86) International application number: PCT/CN2020/123409
(87) International publication number: WO 2022/082774

(57) **Abstract**

This application discloses a beam management method and a communication apparatus. The method includes: A first node receives first indication information from a network device, and the first node sends and/or receives a signal in a first time unit based on an access beam indicated by the first indication information, where the first indication information indicates one or more access beams used by the first node in the first time unit, and the one or more access beams are used for receiving or sending on an access link. The first indication information may indicate the one or more access beams used by the first node in the first time unit. Therefore, the network device sends the first indication information to the first node, that is, the network device may enable the first node to scan the beams, and determine a beam used for signal forwarding. For example, beams in a plurality of directions are used to meet a coverage scope requirement. For another example, a beam with a narrow width is used to meet a gain amplification requirement.

## Description

### TECHNICAL FIELD

This application relates to the field of wireless communication technologies, and in particular, to a beam management method and a communication apparatus.

### BACKGROUND

A network capacity and coverage can be improved by using a wireless relay technology (wireless relay technology). A general idea is as follows: A network device (donor gNodeB, DgNB) is connected to a core network (for example, a core network (5G core, 5GC) in a 5G system) through a wired link, then adds a relay node (relay node, RN) between the DgNB and a terminal, provides a wireless access service for the terminal through an access link (access link, AL) of the relay node, and is connected to the DgNB through a backhaul link (backhaul link, BL) of the relay node, to transmit service data of the terminal.

Before sending data from a host to the terminal, the relay node may amplify a signal used to carry the data, and then send the amplified signal to the terminal; or before sending data from the terminal to the network device, the relay node may amplify a signal used to carry the data, and then send the amplified signal to the network device. This working mode of the relay node may alternatively be understood as an amplification forwarding mode.

The relay node amplifies a received signal and forwards the signal through an antenna or an antenna array. Currently, the antenna or the antenna array uses a fixed beam or an omnidirectional beam. Coverage of the fixed beam is small, and the omnidirectional beam has no beam gain. It can be learned that currently, a relay node based on a fixed beam or an omnidirectional beam has a technical problem that coverage is limited or a gain cannot meet a requirement.

### SUMMARY

This application provides a beam management method and a communication apparatus, to enable beam scanning of a relay node, to forward a signal based on an appropriate beam. This meets a coverage scope requirement and a gain requirement.

According to a first aspect, a beam method is provided. The method may be performed by a first communication apparatus. The first communication apparatus may be a communication device or a communication apparatus, for example, a chip system, that can support the communication device in implementing a function required in the method. The following provides descriptions by using an example in which the communication device is a first node. The method includes the following steps:

A first node receives first indication information from a network device, and the first node sends and/or receives a signal in a first time unit based on an access beam indicated by the first indication information, where the first indication information indicates one or more access beams used by the first node in the first time unit, the one or more access beams are used for receiving and/or sending on an access link, and the access link is a communication link between the first node and a terminal or a next-hop node. In this solution, the first indication information indicates the one or more access beams used by the first node in the first time unit. Therefore, the network device sends the first indication information to the first node, that is, the network device may enable the first node to scan the beams, and determine a beam used for signal forwarding. For example, beams in a plurality of directions are used to meet a coverage scope requirement. For another example, a beam with a narrow width is used to meet a gain amplification requirement.

In a possible implementation, the first time unit may have a same transmission direction, for example, used for uplink receiving or downlink sending on the access link, or the first time unit may have different transmission directions, for example, used for uplink receiving and downlink sending on the access link. Correspondingly, the first indication information may be used for uplink receiving on the access link and used for downlink sending on the access link to separately indicate respective corresponding access beams, or may be used for uplink receiving on the access link and used for downlink sending on the access link to indicate a same access beam.

For example, the first time unit includes a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit. In this solution, if a time unit not only includes a first time subunit but also includes a second time subunit, the first indication information may separately indicate a first access beam and a second access beam, and the first access beam and the second access beam may be different. To be specific, the first indication information separately indicates the first access beam used for uplink receiving on the access link, and separately indicates the second access beam used for downlink sending on the access link. This is more flexible.

For example, the first time unit includes a first time subunit and a second time subunit, the first time subunit is used for uplink receiving on the access link, the second time subunit is used for downlink sending on the access link, and the first indication information indicates a third access beam that corresponds to the first time subunit and the second time subunit and that is used for downlink sending. To be specific, in this solution, the first indication information may indicate the first node to use a same access beam used for uplink receiving on the access link and used for downlink sending on the access link.

In a possible implementation, the first node may alternatively determine, based on a transmission direction of the first time unit, whether the access beam used in the first time unit is used for uplink receiving or downlink sending.

For example, the first time unit is used for uplink receiving on the access link, and the first indication information indicates a fourth access beam that corresponds to the first time unit and that is used for uplink receiving. In this solution, if the first time unit is used for uplink receiving on the access link, that is, a transmission direction of the first time unit is uplink receiving, the first node may consider that the fourth access beam indicated by the first indication information is a beam used for uplink receiving.

For example, the first time unit is used for downlink sending on the access link, and the first indication information indicates a fifth access beam that corresponds to the first time unit and that is used for downlink sending. In this solution, if the first time unit is used for downlink sending on the access link, that is, a transmission direction of the first time unit is downlink sending, the first node may consider that the fifth access beam indicated by the first indication information is a beam used for downlink sending.

In a possible implementation, the first indication information further indicates that the one or more access beams that are in the first time unit or one or more access beams that are in one or more time subunits included in the first time unit and that are used by the first node are silent. In this solution, the first indication information may further indicate the first node not to use a specific access beam or some specific access beams in the first time unit, that is, not to perform receiving or sending on the access link. To be specific, the first indication information may jointly indicate the access beam and a state of the access beam. For example, if the access beam is in a silent state, the first indication information may further indicate the first node not to perform receiving or sending on the access link in, for example, the first time unit.

In a possible implementation, the method further includes: If the first time unit includes a flexible symbol, the first node ignores the first indication information on the flexible symbol. In this solution, if the first time unit includes the flexible symbol, when forwarding a signal on the flexible symbol, the first node may ignore the first indication information. In other words, the first node may not forward the signal on the flexible symbol based on the access beam indicated by the first indication information, or considers that the first indication information is invalid for the flexible symbol.

In a possible implementation, the method further includes: The first node receives or sends one or more signals on the access link through the one or more access beams, where the plurality of signals are in a one-to-one correspondence with the plurality of access beams. The network device may configure or predefine the correspondence between the plurality of signals and the plurality of access beams, and the plurality of signals may be considered as some specific signals. When the first node sends a specific signal, for example, a first signal, the first node may select, based on the correspondence, a first access beam corresponding to the first signal for sending.

In a possible implementation, the signal includes one or more of the following signals (channels):
a synchronization signal block (synchronization signal block, SSB), a physical broadcast channel block (physical broadcast channel, PBCH) block (block), a physical downlink shared channel for scheduling a system information block1 (system Information block1 physical downlink shared channel, SIB1-PDSCH), a physical downlink control channel for scheduling a SIB1 (physical downlink control channel, SIB 1-PDCCH), a channel state information reference signal (channel state Information reference signal, CSI-RS), or a tracking reference signal (tracking reference signal, TRS).

In a possible implementation, the signal is a downlink signal, and an access beam corresponding to the downlink signal is used for downlink sending on the access link; or the signal is an uplink signal, and an access beam corresponding to the uplink signal is used for uplink receiving on the access link. In this solution, if a specific signal is a downlink signal, an access beam corresponding to the signal is a beam used for downlink sending on the access link. On the contrary, if a specific signal is an uplink signal, an access beam corresponding to the signal is a beam used for uplink receiving on the access link.

In a possible implementation, a priority of the one-to-one correspondence between the plurality of signals and the plurality of access beams is higher than a priority of the first indication information. In this solution, when the first node sends some specific signals, for example, a first signal in the plurality of signals, if a time unit occupied by the first signal is the first time unit, the first node preferentially uses, based on the correspondence between the plurality of signals and the plurality of access beams, a first access beam corresponding to the first signal. In other words, although the network device indicates the used access beam for the first node by using the first indication information, the first node may ignore or not use the first indication information, or consider that the first indication information is invalid, and still send the first signal through the first access beam corresponding to the first signal. That is, for the first node, the priority of the correspondence between the plurality of signals and the plurality of access beams is higher than the priority of the first indication information.

In a possible implementation, a beam corresponding to an antenna or an antenna array included in the first node may be divided. A specific division manner is not limited in this embodiment of this application. For example, the first node includes one or more beams; or the first node includes one or more beam groups, and each beam group includes one or more beams; or the first node may include one or more beam groups, each beam group includes one or more beam subgroups, and each beam subgroup includes one or more beams.

In a possible implementation, the method further includes:
The first node sends first information to the network device, where the first information indicates beam information of the first node, and the beam information includes one or more of the following information: an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group. In this solution, the first node may report the beam information of the first node to the network device, to assist the network device in indicating a to-be-used beam for the first node.

In a possible implementation, the first node includes a plurality of beam groups, where a first beam group in the plurality of beam groups includes P beams, a second beam group in the plurality of beam groups includes Q beams, the P beams have a first beam width, the Q beams have a second beam width, P is an integer greater than or equal to 1, and Q is an integer greater than or equal to 1. In this case, the first indication information may indicate the first node to perform receiving or sending on the access link in the first time unit through the first beam having the first beam width or the second beam having the second beam width, and the first node sends and/or receives the signal in the first time unit based on the first beam or the second beam indicated by the first indication information. In this solution, the first node includes a plurality of beam groups, and beams included in different beam groups may have different widths. The network device may indicate, for the first node, to send or receive a signal through a beam with a wide width, to meet a coverage requirement as much as possible, or may indicate, for the first node, to send or receive a signal through a beam with a narrow width, to meet a forwarding gain amplification requirement.

According to a second aspect, an embodiment of this application provides a beam management method. The method may be performed by a second communication apparatus. The second communication apparatus may be a communication device or a communication apparatus, for example, a chip or a chip system, that can support the communication device in implementing a function required in the method. The following provides descriptions by using an example in which the communication device is a network device. The method includes the following steps:

A network device generates first indication information, and sends the first indication information to a first node, where the first indication information indicates one or more access beams used by the first node in a first time unit, the one or more access beams are used for receiving or sending on an access link, and the access link is a communication link between the first node and a terminal or a next-hop node.

In a possible implementation, the first time unit includes a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit.

In a possible implementation, the first time unit includes a first time subunit and a second time subunit, the first time subunit is used for uplink receiving on the access link, the second time subunit is used for downlink sending on the access link, and the first indication information indicates a third access beam corresponding to the first time subunit and the second time subunit.

In a possible implementation, the first time unit is used for uplink receiving on the access link, and the first indication information indicates a fourth access beam that corresponds to the first time unit and that is used for uplink receiving.

In a possible implementation, the first time unit is used for downlink sending on the access link, and the first indication information indicates a fifth access beam that corresponds to the first time unit and that is used for downlink sending.

In a possible implementation, the first indication information further indicates that the one or more access beams that are in the first time unit or one or more access beams that are in one or more time subunits included in the first time unit and that are used by the first node are silent.

In a possible implementation, if the first time unit includes a flexible symbol, the first indication information is invalid on the flexible symbol.

In a possible implementation, the method further includes: The network device configures the first node to receive or send one or more signals on the access link through the one or more access beams, where the plurality of signals or channels are in a one-to-one correspondence with the plurality of access beams.

In a possible implementation, the signal includes one or more of the following signals (channels):
a synchronization signal block, a physical broadcast channel block, a physical downlink control channel for scheduling a system information block, a physical downlink shared channel for scheduling a system information block, a channel state information reference signal, or a tracking reference signal.

In a possible implementation, the signal is a downlink signal, and an access beam corresponding to the downlink signal is used for downlink sending on the access link; or
the signal is an uplink signal, and an access beam corresponding to the uplink signal is used for uplink receiving on the access link.

In a possible implementation, a priority of the one-to-one correspondence between the plurality of signals and the plurality of access beams is higher than a priority of the first indication information.

In a possible implementation, the transceiver module is further configured to:
receive first information from the first node, where the first information indicates beam information of the first node, and the beam information includes one or more of the following information:
an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

In a possible implementation, the first indication information indicates the first node to perform receiving or sending on the access link in the first time unit through a first beam having the first beam width or a second beam having the second beam width; and the first node includes a plurality of beam groups, a first beam group in the plurality of beam groups includes P beams, a second beam group in the plurality of beam groups has Q beams, the P beams have the first beam width, the Q beams have the second beam width, P is an integer greater than or equal to 1, and Q is an integer greater than or equal to 1.

For technical effects brought by the second aspect or the possible implementations of the second aspect, refer to the descriptions of the technical effects of the first aspect or the possible implementations of the first aspect.

According to a third aspect, an embodiment of this application provides a communication apparatus. The communication apparatus may be a relay device having a forwarding function or a communication apparatus, for example, a chip or a chip system, that can support the relay device in implementing a function required in the method. The communication apparatus may include a processing module and a transceiver module, where
the transceiver module is configured to receive first indication information from a network device, where the first indication information indicates one or more access beams used by a first node in a first time unit, the one or more access beams are used for receiving or sending on an access link, and the access link is a communication link between the first node and a terminal or a next-hop node; and
the processing module is configured to control the transceiver module to send and/or receive a signal in the first time unit based on the access beam indicated by the first indication information.

In a possible implementation, the first time unit includes a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit.

In a possible implementation, the first time unit includes a first time subunit and a second time subunit, the first time subunit is used for uplink receiving on the access link, the second time subunit is used for downlink sending on the access link, and the first indication information indicates a third access beam corresponding to the first time subunit and the second time subunit.

In a possible implementation, the first time unit is used for uplink receiving on the access link, and the first indication information indicates a fourth access beam that corresponds to the first time unit and that is used for uplink receiving.

In a possible implementation, the first time unit is used for downlink sending on the access link, and the first indication information indicates a fifth access beam that corresponds to the first time unit and that is used for downlink sending.

In a possible implementation, the first indication information further indicates that the one or more access beams that are in the first time unit or one or more access beams that are in one or more time subunits included in the first time unit and that are used by the first node are silent.

In a possible implementation, if the first time unit includes a flexible symbol, the transceiver module is further configured to ignore the first indication information on the flexible symbol.

In a possible implementation, the transceiver module is further configured to:
receive or send one or more signals on the access link through the one or more access beams, where the plurality of signals or channels are in a one-to-one correspondence with the plurality of access beams.

In a possible implementation, the signal includes one or more of the following signals (channels):
a synchronization signal block, a physical broadcast channel block, a physical downlink control channel for scheduling a system information block, a physical downlink shared channel for scheduling a system information block, a channel state information reference signal, or a tracking reference signal.

In a possible implementation, the signal is a downlink signal, and an access beam corresponding to the downlink signal is used for downlink sending on the access link; or the signal is an uplink signal, and an access beam corresponding to the uplink signal is used for uplink receiving on the access link.

In a possible implementation, a priority of the one-to-one correspondence between the plurality of signals and the plurality of access beams is higher than a priority of the first indication information.

In a possible implementation, the transceiver module is further configured to send first information to the network device, where the first information indicates beam information of the first node, and the beam information includes one or more of the following information:
an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

In a possible implementation, the communication apparatus includes a plurality of beam groups, a first beam group in the plurality of beam groups includes P beams, a second beam group in the plurality of beam groups includes Q beams, the P beams have a first beam width, the Q beams have a second beam width, P is an integer greater than or equal to 1, and Q is an integer greater than or equal to 1; and
the first indication information indicates the first node to perform receiving or sending on the access link in the first time unit through a first beam having the first beam width or a second beam having the second beam width; and
the transceiver module is specifically configured to send and/or receive a signal in the first time unit based on the first beam or the second beam indicated by the first indication information.

For technical effects brought by the third aspect or the possible implementations of the third aspect, refer to the descriptions of the technical effects of the first aspect or the possible implementations of the first aspect.

According to a fourth aspect, an embodiment of this application provides a communication apparatus. The communication apparatus may be a network device or a communication apparatus, for example, a chip or a chip system, that can support the network device in implementing a function required in the method. The communication apparatus may include a processing module and a transceiver module, where
the processing module is configured to generate first indication information, where the first indication information indicates one or more access beams used by a first node in a first time unit, the one or more access beams are used for receiving or sending on an access link, and the access link is a communication link between the first node and a terminal or a next-hop node; and
the transceiver module is configured to send the first indication information to the first node.

In a possible implementation, the first time unit includes a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit.

In a possible implementation, the first time unit includes a first time subunit and a second time subunit, the first time subunit is used for uplink receiving on the access link, the second time subunit is used for downlink sending on the access link, and the first indication information indicates a third access beam corresponding to the first time subunit and the second time subunit.

In a possible implementation, the first time unit is used for uplink receiving on the access link, and the first indication information indicates a fourth access beam that corresponds to the first time unit and that is used for uplink receiving.

In a possible implementation, the first time unit is used for downlink sending on the access link, and the first indication information indicates a fifth access beam that corresponds to the first time unit and that is used for downlink sending.

In a possible implementation, the first indication information further indicates that the one or more access beams that are in the first time unit or one or more access beams that are in one or more time subunits included in the first time unit and that are used by the first node are silent.

In a possible implementation, if the first time unit includes a flexible symbol, the first indication information is invalid on the flexible symbol.

In a possible implementation, the processing module is further configured to configure the first node to receive or send one or more signals on the access link through the one or more access beams, where the plurality of signals or channels are in a one-to-one correspondence with the plurality of access beams.

In a possible implementation, the signal includes one or more of the following signals (channels):
a synchronization signal block, a physical broadcast channel block, a physical downlink control channel for scheduling a system information block, a physical downlink shared channel for scheduling a system information block, a channel state information reference signal, or a tracking reference signal.

In a possible implementation, the signal is a downlink signal, and an access beam corresponding to the downlink signal is used for downlink sending on the access link; or the signal is an uplink signal, and an access beam corresponding to the uplink signal is used for uplink receiving on the access link.

In a possible implementation, a priority of the one-to-one correspondence between the plurality of signals and the plurality of access beams is higher than a priority of the first indication information.

In a possible implementation, the transceiver module is further configured to:
receive first information from the first node, where the first information indicates beam information of the first node, and the beam information includes one or more of the following information:
an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

In a possible implementation, the first indication information indicates the first node to perform receiving or sending on the access link in the first time unit through a first beam having a first beam width or a second beam having a second beam width; and the first node includes a plurality of beam groups, a first beam group in the plurality of beam groups includes P beams, a second beam group in the plurality of beam groups has Q beams, the P beams have the first beam width, the Q beams have the second beam width, P is an integer greater than or equal to 1, and Q is an integer greater than or equal to 1.

For technical effects brought by the fourth aspect or the possible implementations of the fourth aspect, refer to the descriptions of the technical effects of the first aspect or the possible implementations of the first aspect.

The processing module included in the communication apparatus in the third aspect and the fourth aspect is a processor, and/or the transceiver module is a transceiver.

According to a fifth aspect, an embodiment of this application provides a communication apparatus. The communication apparatus may be the communication apparatus according to either the third aspect or the fourth aspect in the foregoing embodiments, or a chip or a chip system in the communication apparatus according to either the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first node or the network device in the foregoing method embodiments.

It should be understood that the communication interface may be a transceiver in the communication apparatus, for example, implemented through an antenna, a feeder, and a codec in the communication apparatus. Alternatively, if the communication apparatus is a chip disposed in a network device or a terminal, the communication interface may be an input/output interface of the chip, for example, an input/output circuit or a pin, and is configured to input/output instructions, data, or a signal. The transceiver is used by the communication apparatus to communicate with another device. For example, when the communication apparatus is the first node, the another device is the network device; or when the communication apparatus is the network device, the another device is the first node.

According to a sixth aspect, an embodiment of this application provides a chip system. The chip system includes a processor, may further include a memory, and is configured to implement the method performed by the communication apparatus according to either the third aspect or the fourth aspect. In a possible implementation, the chip system further includes the memory, configured to store program instructions and/or data. The chip system may include a chip, or may include a chip and another discrete component.

According to a seventh aspect, an embodiment of this application provides a communication system. The communication system includes the communication apparatus according to the third aspect and the communication apparatus according to the fourth aspect.

According to an eighth aspect, this application provides a computer-readable storage medium. The computer-readable storage medium stores a computer program. When the computer program is run, the method performed by the first node in the foregoing aspects is implemented, or the method performed by the network device in the foregoing aspects is implemented.

According to a ninth aspect, a computer program product is provided. The computer program product includes computer program code. When the computer program code is run, the method performed by the first node in the foregoing aspects is performed, or the method performed by the network device in the foregoing aspects is performed.

For beneficial effects of the fifth aspect to the ninth aspect and the implementations of the fifth aspect to the ninth aspect, refer to descriptions of beneficial effects of the aspects or the implementations of the aspects.

### BRIEF DESCRIPTION OF DRAWINGS

FIG. 1 is a schematic diagram of a network architecture to which an embodiment of this application is applicable;
FIG. 2 is a schematic flowchart of beam management according to an embodiment of this application;
FIG. 3 is a schematic diagram of a beam group included in a relay node according to an embodiment of this application;
FIG. 4 is another schematic diagram of a beam group included in a relay node according to an embodiment of this application;
FIG. 5 is an example pattern of a beam group, a beam subgroup, and a beam included in each beam subgroup according to an embodiment of this application;
FIG. 6 is a pattern of an access beam in a first time unit according to an embodiment of this application;
FIG. 7 is a schematic diagram of sending two CSI-RSs to a relay node by a network device according to an embodiment of this application;
FIG. 8 is a schematic diagram of a structure of a communication apparatus according to an embodiment of this application;
FIG. 9 is another schematic diagram of a structure of a communication apparatus according to an embodiment of this application; and
FIG. 10 is a schematic diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

Before this application is described, some terms in embodiments of this application are first briefly explained and described, to help a person skilled in the art have a better understanding.
(1) A terminal side device is a device that provides voice and/or data connectivity for a user. The terminal side device in this application may be a terminal device or a terminal, or a hardware component that is inside the terminal device and that is capable of implementing functions of the terminal device.

In embodiments of this application, the terminal side device may be referred to as user equipment (user equipment, UE), a mobile station (mobile station, MS), a mobile terminal (mobile terminal, MT), or the like, for example, may include a handheld device having a wireless connection function or a processing device connected to a wireless modem. The terminal may communicate with a core network through a radio access network (radio access network, RAN), and exchange a voice and/or data with the RAN. Examples of some terminal devices are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a barcode, radio frequency identification (radio frequency identification, RFID), a sensor, a satellite navigation system such as a global positioning system (global positioning system, GPS) or a BeiDou positioning system, an information sensing device such as a laser scanner, or the like.

The terminal side device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs. The terminal may alternatively be a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a future evolved public land mobile network (public land mobile network, PLMN), a vehicle device in vehicle to everything (vehicle to everything, V2X), a customer premises equipment (customer premises equipment, CPE), or the like.

A function of the terminal side device may be implemented through a hardware component inside the terminal device, and the hardware component may be a processor and/or a programmable chip inside the terminal device. Optionally, the chip may be implemented by an application-specific integrated circuit (application-specific integrated circuit, ASIC) or a programmable logic device (programmable logic device, PLD). The PLD may be any one of a complex programmable logic device (complex programmable logic device, CPLD), a field programmable gate array (field programmable gate array, FPGA), generic array logic (generic array logic, GAL), a system on a chip (system on a chip, SOC), or any combination thereof.

However, if the various terminals described above are located on a vehicle (for example, placed in the vehicle or installed in the vehicle), the terminals may be considered as vehicle-mounted terminal devices. For example, the vehicle-mounted terminal devices are also referred to as on-board units (on-board units, OBUs).

(2) A network device is a node that may access a core network through the node, and is a device that connects a terminal side device to a wireless network in a communication system. The network device is generally connected to the core network through a wired link (for example, an optical fiber cable). The network device may be responsible for receiving data from the core network and forwarding the data to a wireless backhaul device, or receiving data from a wireless backhaul device and forwarding the data to the core network. Generally, the network device may be connected to the network in a wired manner.

In an example, the network device may include a radio network controller (radio network controller, RNC), a NodeB (NodeB, NB), a base station controller (base station controller, BSC), a base transceiver station (base transceiver station, BTS), a home evolved NodeB (for example, a home evolved NodeB, or a home NodeB, HNB), a baseband unit (baseband unit, BBU), and the like, or may include an evolved NodeB (NodeB, eNB, or e-NodeB, evolved NodeB) in an evolved LTE system (LTE-Advanced, LTE-A), or may be a next generation NodeB (next generation NodeB, gNB), or the like in a 5th generation mobile communication technology (5th generation, 5G) new radio (new radio, NR) system. In another example, the network device may include a central unit (central unit, CU) (which is referred to as a Donor-CU or a gNB-CU in this application) and a distributed unit (distributed unit, DU) (which is referred to as a Donor-DU or a gNB-DU in this application). The gNB-CU and the gNB-DU are connected through an F 1 interface, and the F 1 interface may further include a control plane interface (F 1-C) and a user plane interface (F1-U). The CU and the core network are connected through a next generation (next generation, NG) interface. The gNB-CU or the Donor-CU may alternatively exist in a form in which a user plane (User plane, UP) (which is referred to as CU-UP in this application) and a control plane (Control plane, CP) (which is referred to as CU-CP in this application) are separated. In other words, the gNB-CU or the Donor-CU includes the CU-CP and the CU-UP. One gNB-CU may include one gNB-CU-CP and at least one gNB-CU-UP. Alternatively, one Donor-CU may include one Donor-CU-CP and at least one Donor-CU-UP.

A function of the network device may be implemented by a hardware component inside the network device, for example, a processor and/or a programmable chip inside the network device. For example, the chip may be implemented through an ASIC or a PLD. The PLD may be any one of a CPLD, an FPGA, GAL, and a SOC or any combination thereof.

(3) A wireless backhaul device is one of the foregoing base stations or terminal devices having a forwarding function, or may be a repeater having a control function, or may be an intelligent meta-surface (intelligent meta-surface, RIS), or may be an independent device form, a vehicle-mounted device, or an apparatus disposed on a mobile object. In an example, in long term evolution (long term evolution, LTE), the wireless backhaul device may be referred to as a relay node (relay node, RN), or may be referred to as a relay device, a relay transmission reception point (relay transmission reception point, rTRP), a transmission point (transmission point, TP), or the like. In a new radio (new radio) system, the relay node may also be referred to as an integrated access and backhaul (integrated access and backhaul, IAB) node. The wireless backhaul device needs to first decode UE data transmitted on a backhaul link, and then re-encodes the UE data and sends the data to UE through an access link; or the wireless backhaul device may directly amplify a backhaul link signal and forward the signal to UE. The wireless backhaul device may establish a wireless backhaul link with one or more upper-level nodes (parent nodes), and access the core network through the upper-level nodes. The upper-level may control (for example, perform data scheduling, timing modulation, and power control) on the wireless backhaul device by using a plurality of types of signaling. In addition, the wireless backhaul device may provide services for one or more lower-level nodes (child nodes). The upper-level node of the wireless backhaul device may be a base station, or may be another relay node. The lower-level node of the wireless backhaul device may be a terminal, or may be another relay node. For ease of description, in this specification, an example in which the wireless backhaul device is a relay node is used.

It should be understood that before sending data from the network device to the terminal, the relay node may amplify a signal used to carry the data, and then send the amplified signal to the terminal; or before sending data from the terminal to the network device, the relay node may amplify a signal used to carry the data, and then send the amplified signal to the network device. This working mode of the relay node may alternatively be understood as an amplification forwarding mode. Alternatively, the relay node demodulates and decodes data from the network device, re-codes the decoded data, and sends the re-encoded data to the terminal; or the relay node demodulates and decodes data from the terminal, re-codes the decoded data, and sends the re-encoded data to the network device. This working mode of the relay node may be understood as a decoding and forwarding mode.

(4) "A plurality of" in embodiments of this application means two or more than two. In view of this, "a plurality of" in embodiments of this application may also be understood as "at least two". "At least one" may be understood as one or more, for example, understood as one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/", unless otherwise specified, generally represents an "or" relationship between the associated objects. The terms "system" and "network" may be used interchangeably in embodiments of this application.

Unless otherwise specified, ordinal numbers such as "first" and "second" mentioned in embodiments of this application are used to distinguish between a plurality of objects, and are not intended to limit a sequence, a time sequence, priorities, or importance of the plurality of objects.

The following describes technical features related to embodiments of this application.

To improve spectrum utilization, base stations will be deployed more densely in the future. However, because deployment costs of an optical fiber are quite high, a connection to a core network is established through a backhaul link of a relay node, so that some deployment costs of the optical fiber can be saved. The relay node may provide a wireless access service for a terminal side device through an AL. The relay node is connected to a network device through the BL to transmit service data of the terminal side device, and coverage of a mobile communication system is expanded by resending or forwarding the service data.

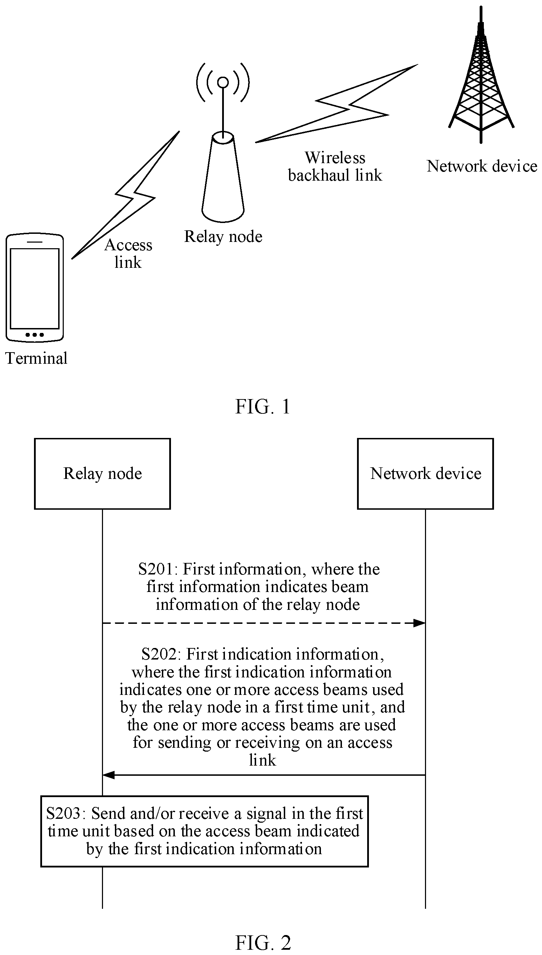

FIG. 1 shows a network architecture. A relay node provides wireless access and wireless backhaul of an access service for a terminal. A network device (a donor node of the relay node) provides a wireless backhaul function for the relay node, and provides an interface between the terminal and a core network. The relay node is connected to the network device through a wireless backhaul link, so that the terminal served by the relay node is connected to the core network. It should be noted that, although the terminal, the relay node, and the network device are shown in the network architecture diagram shown in FIG. 1, the network architecture may not be limited to including the terminal, the relay node, and the network device. For example, the network architecture may further include a core network device, a device for carrying a virtual network function, or the like. These are obvious to a person of ordinary skill in the art, and are not described in detail herein. In addition, although one terminal, one relay node, and one network device are shown in the system shown in FIG. 1, the network architecture does not limit quantities of terminals, relay nodes, and network devices. For example, the network architecture may include a plurality of terminals, a plurality of relay nodes, and a plurality of network devices. The relay node in FIG. 1 may be fixed or mobile. This is not limited in this embodiment of this application.

In a possible implementation, the relay node includes two antennas or two groups of antennas. An example in which the relay node includes two groups of antennas, for example, an antenna group 1 and an antenna group 2 is used. The antenna group 1 may receive a downlink signal from the network device. After being amplified, the downlink signal is forwarded by the antenna group 2 to the terminal (for example, a path indicated by a thin line arrow in FIG. 2). The antenna group 2 may receive an uplink signal from the terminal. After being amplified, the uplink signal is forwarded by the antenna group 1 to the network device (for example, a path indicated by a bold line arrow in FIG. 2). In a conventional technology, the antenna group 1 and the antenna group 2 use a fixed beam or an omnidirectional beam. Coverage of the fixed beam is small, and the omnidirectional beam has no amplification gain. It can be learned that currently, a relay node based on a fixed beam or an omnidirectional beam has a problem that coverage is limited or a gain cannot meet a requirement.

In view of this, an embodiment of this application provides a beam management method. According to the method, a relay node may be enabled to scan a beam, and determine a beam used for forwarding a signal, for example, beams in a plurality of directions, to meet a coverage scope requirement, and a gain amplification requirement.

The beam management method, for the relay node, provided in this embodiment of this application may be applied to various communication systems including a wireless backhaul device, for example, an NR system, an LTE system, an LTE-A system, a worldwide interoperability for microwave access (worldwide interoperability for microwave access, WiMAX), or a wireless local area network (wireless local area networks, WLAN).

For example, the communication method provided in this embodiment of this application may be applied to the network architecture shown in FIG. 1. In the network architecture shown in FIG. 1, the terminal is connected to the relay node in a wireless manner, and the relay node is connected to the network device in a wireless manner. Communication between the terminal and the relay node and between the relay node and the network device may be performed by using a licensed spectrum (licensed spectrum), or may be performed by using an unlicensed spectrum (unlicensed spectrum), or may be performed by using both a licensed spectrum and an unlicensed spectrum. For example, the licensed spectrum may be a spectrum above 6 GHz. This is not limited herein. It should be understood that FIG. 1 is merely an example for description, and quantities of terminals and relay nodes included in the wireless communication system are not specifically limited. After receiving the uplink signal of the terminal, the relay node may amplify the uplink signal, and then forward the amplified uplink signal to the network device. After receiving the downlink signal sent by the network device, the relay node amplifies the downlink signal, and then forwards the amplified downlink signal to the terminal.

It should be understood that, in embodiments of this application, the relay node is used merely for a purpose of description, and does not indicate that the solutions in embodiments of this application are used only in an LTE or NR scenario. In embodiments of this application, the relay node may be any node or device having a wireless backhaul function. It should be understood that use of the relay node and use of the IAB node in the embodiments of this application have a same meaning.

The following describes in detail a beam management method provided in embodiments of this application with reference to the accompanying drawings.

FIG. 2 is a flowchart of a beam management method according to an embodiment of this application. In the following description process, an example in which the method is applied to the communication system shown in FIG. 1 is used. In addition, the method may be performed by two communication apparatuses, and the two communication apparatuses are, for example, a first communication apparatus and a second communication apparatus. For ease of description, the following uses an example in which the method is performed by a relay node and a network device, namely, an example in which the first communication apparatus is the relay node and the second communication apparatus is the network device. It should be noted that the communication system in FIG. 1 is merely used as an example in this embodiment of this application. A scenario is not limited thereto.

Specifically, a procedure of the beam management method provided in this embodiment of this application is described as follows:
S201: The relay node sends first information to the network device, and the network device receives the first information, where the first information indicates beam information of the relay node.

It should be understood that the relay node may include one or more antennas, or include one or more antenna arrays, and each antenna array may include one or more antennas. For ease of description, an example in which the relay node includes a plurality of antenna arrays is used below. In this embodiment of this application, a part of antenna arrays in the plurality of antenna arrays of the relay node are used for signal transmission on a backhaul link, and a part of antenna arrays are used for signal transmission on an access link. For example, one antenna array of the relay node is used for signal transmission on the backhaul link or the access link. It should be noted that, in a possible implementation, one antenna array of the relay node may be used for signal transmission on the backhaul link, and may also be used for signal transmission on the access link. For a particular antenna array, it is determined by a deployment scenario that the particular antenna array is used for signal transmission on the backhaul link or the access link. For ease of description, the following uses an example in which the relay node includes two antenna arrays, and the two antenna arrays are respectively referred to as an antenna array 1 and an antenna array 2. The antenna array 1 is used for signal transmission on the backhaul link, and the antenna array 2 is used for signal transmission on the access link. It should be noted that the access link is a communication link between the relay node and a terminal or a next-hop node.

In this embodiment of this application, the antenna array 1 and the antenna array 2 may implement centralized signal sending or receiving in a specific direction through beamforming, to enhance a capability of resisting a path loss of a signal. On a backhaul link side, similar to a procedure of beam alignment between a terminal and a base station, beam alignment between the relay node and the network device may be implemented. On an access link side, an access-side antenna array of the relay node may serve one or more terminals, so that the terminal communicates with the network device. For example, the access-side antenna array of the relay node may forward an SSB (or may be considered as a synchronization signal/PBCH block (synchronization signal/PBCH block, SS/PBCH block)) sent by the network device, to be used by the terminal for initial access, that is, the access-side antenna array may perform downlink forwarding. For example, the access-side antenna array of the relay node receives a random access signal sent by the terminal, and forwards the random access signal to the network device, that is, the access-side antenna array may perform uplink forwarding. To be specific, the access-side antenna array of the relay node may receive a signal from one or more terminals through a beam on the access link side and forward the signal to the network device, or may forward one or more received signals to the terminal. For ease of description, in this specification, the beam on the access link side is referred to as an access beam, that is, the access beam is a beam of the antenna array 2. It should be understood that the access beam includes an uplink access beam used for uplink receiving on the access link and a downlink access beam used for downlink sending on the access link.

This embodiment of this application is intended to manage the beam of the relay node through the network device. In this embodiment of this application, a beam corresponding to an antenna or an antenna array included in the relay node may be divided. A specific division manner is not limited in this embodiment of this application. For example, the relay node includes one or more beams; or the relay node includes one or more beam groups, and each beam group includes one or more beams; or the relay node may include one or more beam groups, each beam group includes one or more beam subgroups, and each beam subgroup includes one or more beams. Coverage of different beam groups may be the same or different, and quantities of beams included in different beam groups may be the same or different. Coverage of different beam subgroups may be the same or may be different. Quantities of beams included in different beam subgroups may be the same or may be different.

Due to implementation constraints, a same beam cannot send and receive a signal at the same time. In other words, a same beam cannot be used for both uplink receiving on the access link and downlink sending on the access link at a same time. For ease of description, in this specification, the beam used for uplink receiving on the access link is referred to as the uplink access beam, and the beam used for downlink sending or forwarding on the access link is referred to as the downlink access beam. Therefore, the network device may manage the beam of the relay node. Beam management herein may be understood as a related operation for sending or receiving an uplink beam or a downlink beam. For example, the network device selects the uplink access beam or the downlink access beam for the relay node; the relay node reports the beam information of the relay node to a donor base station; and the relay node performs beam scanning. Correspondingly, beam management performed by the network device and/or the relay node on downlink sending on the access link is downlink beam management, and beam management performed by the network device and/or the relay node on uplink receiving on the access link is uplink beam management.

In a possible implementation, the relay node may send the first information to the network device, where the first information may indicate the beam information of the relay node, for example, beam quantity information of the relay node and beam grouping information of the relay node. It should be noted that the first information is merely an example of a name. A specific name of the first information is not limited in this embodiment of this application. For example, the first information may be referred to as beam configuration information. In some embodiments, the first information may be carried in one or more fields of existing signaling. This facilitates compatibility with the existing signaling. For example, the first information may be carried in radio resource control (radio resource control, RRC) signaling or a media access control control element (media access control control element, MAC CE). The one or more fields may be fields defined in the RRC signaling or the MAC CE, or may be RRC signaling or a MAC CE that is newly defined. This is not limited in this embodiment of this application. Certainly, the first information may alternatively be carried in signaling or an interface that is newly defined.

Content that may be included in the first information varies based on different beam division manners of the relay node. For example, the first information may include one or more of the following information: an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

A specific implementation form of the first information is not limited in this embodiment of this application, for example, provided that the quantity of beams included in the relay node can be indicated. The following lists one or more possible implementations of the first information.
(1) The first information may include the quantity of beams of the relay node.

For example, the first information may carry a first value and a second value. The first value indicates a quantity of uplink access beams included in the relay node, and the second value indicates a quantity of downlink access beams included in the relay node; or the first value indicates a quantity of uplink access beams included in the relay node, and the second value indicates a quantity of downlink access beams included in the relay node. For example, the first information includes a first field and a second field, the first field indicate the quantity of uplink access beams, the second field indicates the quantity of downlink access beams, a value of the first field is 2, and a value of the second field is 4. In this case, it may be considered that the relay node includes two uplink access beams, and the relay node includes four downlink access beams.

For example, the first information may carry a third value, and the third value indicates a quantity of uplink access beams or downlink access beams included in the relay node. In this case, it may be considered that the quantity of uplink access beams of the relay node is the same as the quantity of downlink access beams of the relay node. For example, the first information includes a first field, the first field indicates the quantity of uplink access beams or the quantity of downlink access beams, and a value of the first field is 4. It may be considered that the relay node includes four uplink access beams, and the relay node further includes four downlink access beams. Because the uplink access beam and the downlink access beam generally have consistency, the quantity of uplink access beams may be the same as the quantity of downlink access beams.

(2) The first information may include the index of the beam of the relay node.

For example, the first information may carry an index of an uplink access beam and an index of a downlink access beam. It should be understood that different beams correspond to different indexes. In this case, the network device may determine, based on the first information, the quantity of beams included in the relay node.

For example, the first information may carry the index of the uplink access beam or the index of the downlink access beam. In this case, it may be considered that the quantity of uplink access beams is the same as the quantity of downlink access beams, and the network device may determine the quantity of uplink access beams and the quantity of downlink access beams based on the first information.

(3) The first information may include the index (identifier) of the beam group, and indicates the beam group included in the relay node. Each beam group includes one or more beams. For example, in this embodiment of this application, a correspondence between a beam and a beam group may be predefined or agreed upon between the relay node and the network device, as shown in Table 1.

**Table 1**

| Index of a beam | Index of a beam group | Index of a beam in a group |
|---|---|---|
| 0 | 0 | 0 |
| 1 | 1 | 0 |
| 2 | 1 | 1 |
| 3 | 2 | 0 |
| 4 | 2 | 1 |
| 5 | 2 | 2 |
| 6 | 2 | 3 |
| ... | ... | ... |

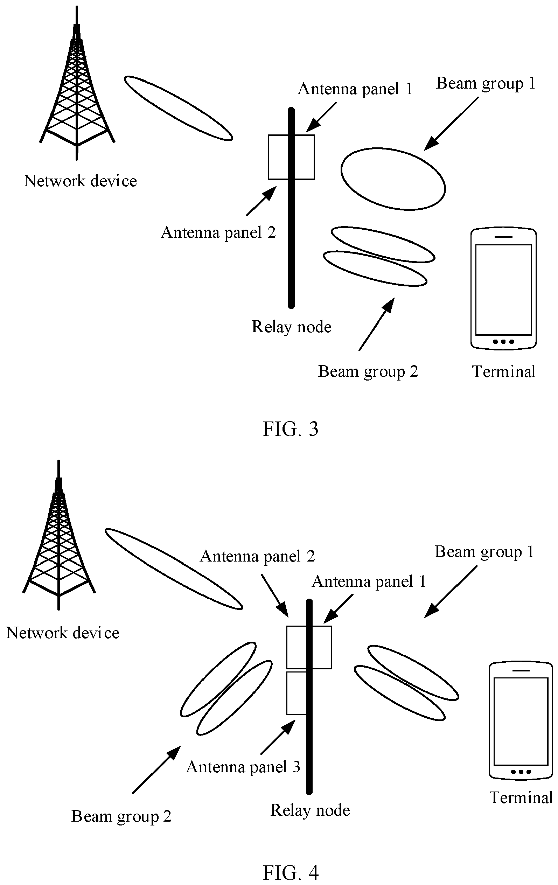

Different beam groups may have different quantities of beams. For example, FIG. 3 is a schematic diagram of a beam group included in the relay node. In FIG. 3, the relay node has two groups of access beams, namely, a beam group 1 and a beam group 2, where the beam group 1 has one access beam and the beam group 2 includes two access beams. In this example, different beam groups may have same coverage. For example, a beam group with a small quantity of beams has a narrow beam width or is in sparse beam distribution, while a beam group with a large quantity of beams has a narrow beam width or is in dense beam distribution. The relay node may use different beam groups to cover an access area. The beam group with a smaller quantity of beams has an advantage of low scanning overheads, while the beam group with a larger quantity of beams has an advantage of large coverage gains. Setting different beam groups may enable the relay node to select different beamforming schemes as required.

The first information may carry an index of one or more beam groups, and the network device may determine, based on the first information and Table 1, a quantity of beams included in the relay node. For example, the first information may include one or more fields. For example, the first information includes a plurality of beam group index fields, and each of the plurality of beam group index fields indicates an index of a beam group. For example, if values carried in the plurality of beam group index fields of the first information is 1 and 2, it may be learned from Table 1 that the beam group 1 includes two access beams, and the beam group 2 includes four access beams. That is, the quantity of beams included in the relay node is 6.

In some embodiments, the first information may alternatively carry information about a quantity of uplink and/or downlink access beams in each beam group. For example, information about a quantity of uplink access beams and/or a quantity of downlink access beams in a specific beam group may be carried in a beam group index field corresponding to the beam group. For a beam group index field, a part of bits of the beam group index field carry an index of a beam group, and a part of bits carry a quantity of uplink access beams and/or a quantity of downlink access beams in the beam group. Certainly, if the part of bits carry the quantity of uplink access beams or the quantity of downlink access beams, it may be considered that, in the corresponding beam group, the quantity of uplink access beams is the same as the quantity of downlink access beams.

In FIG. 3, an example in which different beam groups correspond to different antenna panels of the relay node, that is, one beam group corresponds to one antenna panel is used. In some embodiments, different beam groups may alternatively correspond to a plurality of antenna panels of the relay node. For example, FIG. 4 is a schematic diagram of a beam group included in the relay node. In FIG. 4, an example in which the relay node includes an antenna panel 1, an antenna panel 2, and an antenna panel 3 is used. The relay node includes two beam groups: a beam group 1 and a beam group 2. The beam group 1 corresponds to the antenna panel 1, and the beam group 2 corresponds to the antenna panel 2 and the antenna panel 3. The antenna panel 1 and the antenna panel 2 may be used for an access link, and the antenna panel 3 is used for a backhaul link. Because the beam group 1 and the beam group 2 are located on antenna panels of different transmission links, the relay node may use beams in both the beam group 1 and the beam group 2 for forwarding, to cover different areas. For example, any beam in the beam group 1 is used as an uplink access beam, and any beam in the beam group 2 may be used as a downlink access beam.

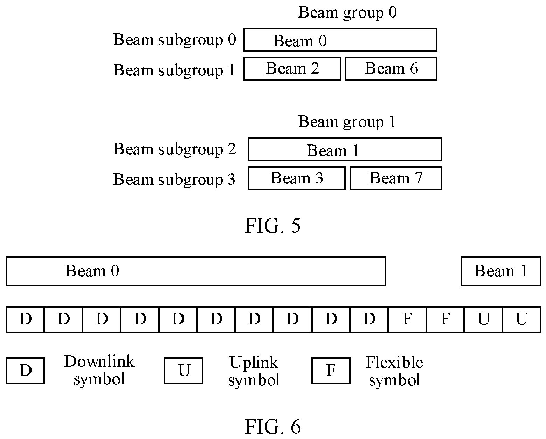

In an alternative solution of (1) to (3), in this embodiment of this application, a plurality of beam groups may be predefined, and each beam group may correspond to one or more antenna panels. Each beam group may include a plurality of beam subgroups, and coverage of the beam subgroups may be the same. Quantities of beams included in different beam subgroups may be the same or may be different. For example, FIG. 5 shows an example of a beam group, a beam subgroup, and a beam included in each beam subgroup.

In this case, the first information may carry an index of the beam subgroup, and the network device may determine, based on the first information and FIG. 5, a quantity of beams included in the relay node. Certainly, the first information may alternatively carry an index of the beam included in the beam subgroup. This is not limited in this embodiment of this application.

In another possible implementation, the relay node may not send the first information, that is, S201 is an optional step and is not necessarily performed. Therefore, a dashed line is used for illustration in FIG. 2. In this case, the quantity of beams or the beam group included in the relay node may be predefined or agreed upon by the relay node and the donor node. If a beam group included in the relay node is predefined, a quantity of beams included in each beam group may be predefined. In this manner, because the first information is not sent, signaling exchange may be reduced.

S202: The network device sends first indication information to the relay node, and the relay node receives the first indication information, where the first indication information indicates one or more access beams used by the relay node in a first time unit, and the one or more access beams are used for sending and/or receiving on an access link.

S203: The relay node sends and/or receives a signal in the first time unit based on the access beam indicated by the first indication information.

In a possible implementation, after receiving the first information, the network device may configure the relay node based on the first information. For example, the network device may configure an uplink access beam and/or a downlink access beam for the relay node based on the first information. In this way, a coverage capability may be improved by controlling beam scanning of the relay node. For example, the network device may generate the first indication information based on the first information. It should be noted that the first indication information generated by the network device may alternatively not depend on the first information.

The first indication information may directly or indirectly indicate an access beam, for example, an uplink access beam and/or a downlink access beam, to be used by the relay node to forward a signal in one or more time units. Access beams corresponding to the time units may be the same or may be different. In this embodiment of this application, the time unit may be a slot, a symbol, a frame, a subframe, or the like. For example, the first indication information indicates a downlink access beam of the relay node in a first slot, and the relay node selects the downlink access beam in the first slot based on the first indication information to perform downlink receiving. For another example, the first indication information indicates an uplink access beam of the relay node in a second slot, and the relay node selects the uplink access beam in the second slot based on the indication information to perform uplink sending.

The following describes one or more possible implementations of the first indication information.

In an example, the first indication information may indicate a specific time unit, for example, the uplink access beam and/or the downlink access beam in the first time unit. This is direct.

The network device may configure (or indicate) the uplink access beam/or the downlink access beam for the first time unit. For example, if the first time unit includes a time unit used for uplink transmission, the network device may configure (or indicate) the uplink access beam for the first time unit. In this case, the first indication information indicates the uplink access beam. Similarly, if the first time unit includes a time unit used for downlink transmission, the network device may configure (or indicate) the downlink access beam for the first time unit. That is, the first indication information indicates the downlink access beam.

During implementation, the relay node may determine, by using other information, whether each time unit or each time subunit needs to be used for uplink forwarding or downlink forwarding. For example, the relay node may determine uplink and downlink configurations in each time unit or each time subunit by using TDD configuration information; and perform downlink forwarding on a downlink symbol, and perform uplink forwarding on an uplink symbol.

For example, if the first time unit is used for uplink receiving on the access link, the first indication information indicates an uplink access beam that corresponds to the first time unit and that is used for uplink receiving.

If the first time unit is used for downlink sending on the access link, the first indication information indicates a downlink access beam that corresponds to the first time unit and that is used for downlink sending.

For example, if a part of time subunits in the first time unit are used for uplink receiving on the access link, and a part of time subunits are used for downlink sending on the access link, the first indication information may indicate an uplink access beam and a downlink access beam.

For example, the first time unit includes a first time subunit used for uplink receiving on the access link and a second time subunit used for downlink sending on the access link. The network device may separately configure (or indicate) the uplink access beam and the downlink access beam for the first time unit. That is, the first indication information separately indicates the uplink access beam and the downlink access beam for the first time unit. Certainly, the network device may separately configure (or indicate) the uplink access beam or the downlink access beam for the first time unit. That is, the first indication information indicates that the first time subunit and the second time subunit may use a same access beam. Herein, the time subunit is the same as the time unit, and may also be one or more slots, one or more symbols, one or more frames, one or more subframes, or the like.

It should be noted that if the first time unit includes a flexible symbol, the first node ignores the first indication information on the flexible symbol. In other words, when performing downlink receiving or uplink sending on the access link on the flexible symbol, the first node may not use the access beam indicated by the first indication information. It should be understood that the flexible symbol herein refers to a flexible (flexible) symbol in the TDD configuration.

For ease of understanding, FIG. 6 is a schematic diagram of a pattern of an access beam in the first time unit. The first time unit includes an uplink symbol, a flexible symbol, and a downlink symbol. It may be considered that the first indication information indicates the relay node to use a configured uplink access beam when forwarding the uplink symbol, and use a configured downlink access beam when forwarding the downlink symbol. Optionally, the relay node may not forward the flexible symbol, or the relay node ignores the flexible symbol. In this solution, the first indication information may separately indicate the uplink access beam and the downlink access beam, and this is more flexible.

In a possible implementation, the first indication information may include (indicate) a correspondence between each time subunit in the first time unit and the access beam. When forwarding a signal in, for example, the first time subunit, the relay node may determine, based on the correspondence, the first access beam corresponding to the first time subunit, and then forward the signal through the first access beam. It should be understood that if the first time subunit is used for uplink receiving on the access link, the first access beam is the uplink access beam; or if the first time subunit is used for downlink sending on the access link, the first access beam is the downlink access beam.

In another possible implementation, the network device may configure an uplink access beam and a downlink access beam for all time units or any time unit. That is, the first indication information indicates the uplink access beam and the downlink access beam that are configured by the network device for all time units or any time unit. When forwarding a signal in a specific time unit, the relay node may determine a to-be-selected beam based on an actual transmission direction. For example, if uplink receiving on the access link is performed in the time unit, the relay node selects an uplink access beam corresponding to the time unit. If the time unit includes an uplink time subunit used for uplink sending on the access link and a downlink time subunit used for downlink receiving on the access link, the relay node performs uplink forwarding in the uplink time subunit based on the uplink access beam, and performs downlink forwarding in the downlink time subunit based on the downlink access beam.

The first indication information may alternatively include indications for a plurality of first time units. For example, the first indication information may indicate access beams in a plurality of slots. For example, the first indication information separately indicates access beams in the plurality of slots, or the first indication information indicates a same access beam in the plurality of slots.

In this embodiment of this application, an implementation of the first indication information is similar to an implementation of the first information. Similarly, the first indication information is merely an example of a name. A specific name of the first indication information is not limited in this embodiment of this application. For example, the first indication information may be referred to as beam configuration information. In some embodiments, the first indication information may be carried in one or more fields of existing signaling. This facilitates compatibility with the existing signaling. For example, the first indication information may be carried in RRC signaling, a MAC CE, or DCI. The one or more fields may be fields defined in the RRC signaling or the MAC CE, or may be RRC signaling or a MAC CE that is newly defined. When the first indication information is carried by the DCI, the DCI may be in a new DCI format, or may reuse an original DCI format. This is not limited in this embodiment of this application. Certainly, the first indication information may alternatively be carried in signaling or an interface that is newly defined.

In addition, content included in the first indication information is not specifically limited in this embodiment of this application. For example, indexes of access beams may be used to identify different access beams. That is, content included in the first indication information is an index of an access beam. For example, the first indication information may carry an index of the uplink access beam and/or an index of the downlink access beam, to indicate the access beam used by the relay node in the first time unit. For another example, the first indication information may carry an index of an uplink access beam group and/or an index of a downlink access beam group, to indicate that the access beam used by the relay node in the first time unit is a beam included in the beam group indicated by the first indication information. For another example, the first indication information may carry an index of an uplink access beam subgroup and/or an index of a downlink access beam subgroup, to indicate that the access beam used by the relay node in the first time unit is a beam included in the beam subgroup indicated by the first indication information. For details, refer to the foregoing implementation of the first information. Details are not described herein again.

It should be understood that the uplink access beam and the downlink access beam may use a same index or identifier set, or may use different indexes or identifier sets. When the uplink access beam and the downlink access beam use the same index or identifier set, the uplink access beam and the downlink access beam that use the same index or identifier set have correspondence or consistency. That is, the uplink access beam and the downlink access beam that have a same index may have a same direction, or have a same spatial filter weight.

Certainly, different access beams may alternatively be identified in another manner, for example, an identifier of a reference signal. The reference signal herein includes a CSI-RS, an SRS, an SSB, and the like. To be specific, the first indication information includes the identifier of the reference signal, and indicates that the access beam is an access beam corresponding to the reference signal.

In this embodiment of this application, in addition to indicating the access beam used by the relay node in the first time unit, the first indication information may further indicate that the one or more access beams used by the relay node in the first time unit or one or more time subunits included in the first time unit are silent. To be specific, the first indication information may further indicate the relay node not to use the one or more access beams in the first time unit or the one or more time subunits included in the first time unit, or the first indication information may further indicate the relay node not to perform uplink forwarding or downlink forwarding in the first time unit or the one or more time subunits included in the first time unit.

For example, an enabled state or a silent state of an access beam in a specific direction (an uplink receiving direction of the access link or a downlink sending direction of the access link) in the first time unit may be defined, as shown in Table 2. "Silent" in Table 2 indicates that the relay node does not perform receiving or sending on the access link. It should be noted that content in Table 2 may be predefined, or may be sent by the network device to the relay node by using signaling.

**Table 2**

| State | Indicated meaning |
|---|---|
| 0 | Access beam 0 |
| 1 | Access beam 1 |
| 2 | Access beam 2 |
| 3 | Silent |

The first indication information may include one or more states in Table 2, and is used for an access beam that may be used by the relay node, or indicates that the relay node does not perform receiving and/or sending on the access link

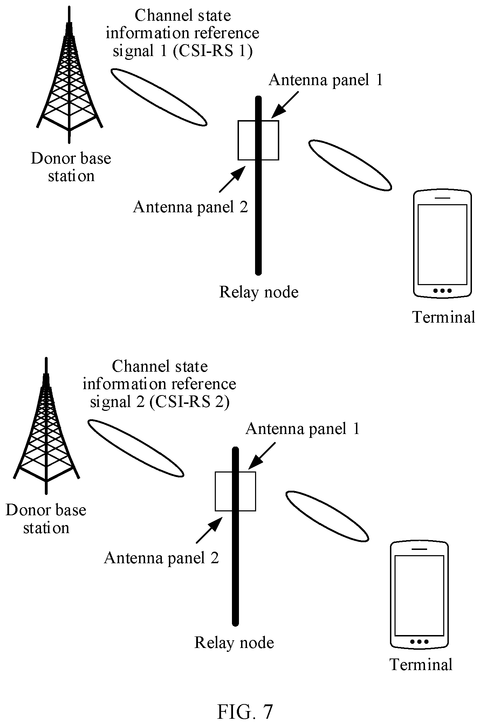

It should be understood that scheduling performed by the network device on the terminal under the relay node needs to match a beam configuration of the relay node. For ease of understanding, FIG. 7 is a schematic diagram of sending two CSI-RSs to the relay node by the network device. The two CSI-RSs are a CSI-RS 1 and a CSI-RS 2. The network device may use a same beam to send the CSI-RS 1 and the CSI-RS 2, that is, a transmitter uses a same weight. However, the network device may configure different identifiers or IDs for the CSI-RS 1 and the CSI-RS 2. The relay node may forward the CSI-RS 1 and the CSI-RS 2 through different downlink access beams. After measuring the CSI-RS 1 and the CSI-RS 2, the terminal separately reports signal quality of the CSI-RS 1 and signal quality of the CSI-RS 2. After the network device obtains the signal quality of the CSI-RS 1 and the signal quality of the CSI-RS 2, the network device may determine an access beam suitable for the relay node serving the terminal. In a subsequent terminal scheduling process, the network device indicates the relay node to use an access beam aligned with UE, namely, a relay forwarding beam corresponding to a CSI-RS with high receiving quality of the UE.

In this embodiment of this application, an access beam to be used by the relay node is indicated, so that forwarding of the relay node may be more efficient. For example, the network device may allocate more time domain resources to an access beam of a relay node having more active terminals. In addition, the network device may more flexibly schedule the terminal by using independent indications of the uplink beam and the downlink beam.

In some embodiments, a specific signal (channel) has a correspondence with an access beam. In an example, a plurality of correspondences between signals and access beams may be defined or configured, as shown in Table 3.

**Table 3**

| Index of a beam | Index of a beam group (optional) | Index of a beam in a group (optional) | Downlink signal | Uplink signal |
|---|---|---|---|---|
| 0 | 0 | 0 | SSB #n | RO #m |
| 1 | 1 | 0 | CSI-RS #k1 | SRS #p1 |
| 2 | 1 | 1 | CSI-RS #k2 | SRS #p2 |

It should be noted that, in Table 3, the SSB #n may indicate a synchronization/broadcast signal block with a specific index. The CSI-RS #k1 and the CSI-RS #k2 may be separately used to indicate one or more CSI-RSs. Table 3 is merely an example. A quantity and a type of a downlink signal are not limited in this embodiment of this application. For example, the downlink signal may alternatively include a SIB1-PDCCH, a SIB1-PDSCH, or a TRS. Herein, the SIB1-PDSCH identifies a PDSCH carrying a SIB1, and the SIB1-PDCCH indicates a PDCCH for scheduling the SIB1-PDSCH or a CORESET occupied by the PDCCH. Similarly, the RO #m may indicate an access occasion (occasion), referred to as an RO for short, for a physical random access channel (physical random access channel, PRACH) of a specific index. The SRS #p1 and the SRS #p2 may be separately used to represent one or more sounding reference signals (sounding reference signals, SRSs). In addition, one or more beams may be configured for one signal or channel. That is, the index of the beam group and a number of the beam in the group in Table 3 are optional. In addition, Table 3 lists only a part of downlink signals and uplink signals. Types and quantities of uplink signals and downlink signals in Table 3 are not limited in this embodiment of this application.

When forwarding a received first signal, the relay node may determine an appropriate access beam based on the correspondence shown in Table 3. For example, if the first signal is an SSB in Table 3, in a time unit occupied by the SSB, the relay node may send the SSB through the first access beam corresponding to the first signal, namely, the access beam 0. Certainly, the relay node may forward the SSB through all beams in the beam group 0, or the relay node may forward the SSB through a part of beams in the beam group 0.

In a possible implementation, the network device may alternatively indicate a to-be-used access beam to the relay node by using an identifier (ID) of a specific signal. For example, the relay node forwards one or more SSBs through a specific access beam, and then the first indication information may indicate the specific access beam by using an index of the SSB.

It should be understood that, for a specific signal, for example, if the first signal is a downlink signal, the first access beam corresponding to the first signal is used for downlink sending on the access link; or if the first signal is an uplink signal, the first access beam corresponding to the first signal is used for uplink receiving on the access link.

It should be noted that, if the relay node forwards a specific signal in the first time unit, for example, a specific uplink signal or a specific downlink signal in Table 3, the relay node preferentially uses an access beam corresponding to the specific signal in Table 3. In Table 3, a priority of a correspondence between the plurality of signals and the plurality of access beams is higher than a priority of the first indication information, that is, a priority of the access beam corresponding to the specific signal is higher than a priority of the access beam indicated by the first indication information. In other words, if the relay node forwards the specific signal in the table 3 in the first time unit, the relay node may ignore the first indication information, that is, ignore the access beam, in the first time unit, that is indicated by the first indication information. That is, if the relay node forwards the specific signal in the table 3 in the first time unit, even if the network device sends the first indication information to the relay node, the relay node may not determine the access beam based on the indication of the first indication information. In this way, a forwarding exception that may be caused by missing detection of the first indication information of the network device can be avoided.

It should be understood that the relay node may forward a part of signals or channels through a wide access beam based on coverage or an overhead requirement; or the relay node may forward a part of signals or channels through a narrow access beam based on a gain requirement. For example, the network device may send, for example, a synchronization signal to the relay node. To implement basic coverage in the coverage of the relay node, the relay node may forward the received synchronization signal, for example, forward the synchronization signal through a wide first access beam. Similarly, the terminal sends, for example, a random access signal to the relay node, and the relay node may forward the random access signal, for example, forward the random access signal through a same first access beam.

In this embodiment of this application, a wide access beam may be configured for some signals, to meet a coverage size requirement. Alternatively, a narrow access beam may be configured for some signals, to meet a signal forwarding gain requirement. For example, the relay node forwards an SSB from the network device. To maintain a basic coverage requirement to a maximum extent, the network device may configure a wide access beam for the relay node to send the SSB. For example, the relay node forwards a PDSCH or a PUSCH. To ensure a large forwarding gain, the network device may configure a narrow access beam for the relay node.

For example, the relay node includes one or more beam groups, and widths of beams included in different beam groups may be different. Two beam groups, for example, a first beam group and a second beam group, included in the relay node are used as an example. The first beam group may include one or more first beams, and the second beam group may include one or more second beams, where the first beam has a first beam width, the second beam has a second beam width, and the first beam width and the second beam width may be different. For example, as shown in FIG. 3, the beam group 1 in the relay node includes one beam, the beam group 2 in the relay node includes two beams, a beam in the beam group 1 has the first beam width, each beam in the beam group 2 has the second beam width, and the first beam width is greater than the second beam width. In this case, the network device may indicate a used beam for the relay node based on a signal to be forwarded by the relay node. To be specific, the first indication information indicates the relay node to perform receiving or sending on the access link through the first beam or the second beam used in the first time unit, so that the relay node sends and/or receives the signal in the first time unit based on the first beam or the second beam indicated by the first indication information.

An example in which the first beam width is greater than the second beam width is used. The relay node forwards, for example, an SSB, and the first indication information sent by the network device to the relay node may carry an index of one or more first beams, or carry an index of a first beam group. The relay node forwards a PUSCH from the terminal, and the first indication information sent by the network device to the relay node may carry an index of one or more second beams, or carry an index of a second beam group.

In this embodiment of this application, the first indication information may indicate the one or more access beams used by the first node in the first time unit. Therefore, the network device sends the first indication information to the first node, that is, the network device may enable the first node to scan the beams, and determine a beam used for signal forwarding. For example, beams in a plurality of directions are used to meet a coverage scope requirement. For another example, a beam with a narrow width is used to meet a gain amplification requirement.

In the foregoing embodiments provided in this application, the methods provided in embodiments of this application are separately described from perspectives of the relay node, the network device, and interaction between the relay node and the network device. To implement functions in the foregoing methods provided in embodiments of this application, the relay node and the network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes communication apparatuses for implementing the foregoing methods in embodiments of this application with reference to the accompanying drawings. Therefore, all the foregoing content may be used in subsequent embodiments, and repeated content is not described again.

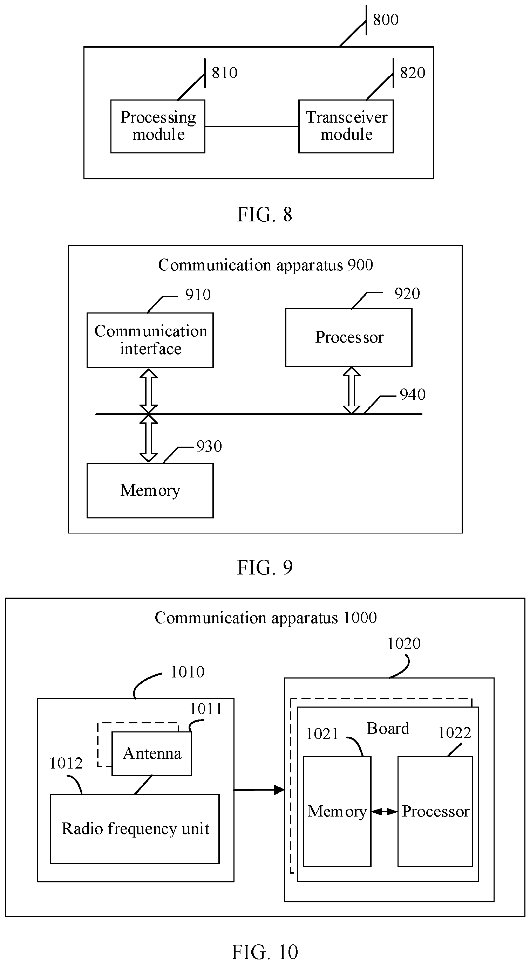

FIG. 8 is a schematic block diagram of a communication apparatus 800 according to an embodiment of this application. The communication apparatus 800 may correspondingly implement functions or steps implemented by the relay node or the network device in the foregoing method embodiments. The communication apparatus may include a processing module 810 and a transceiver module 820. Optionally, the communication apparatus may further include a storage unit. The storage unit may be configured to store instructions (code or a program) and/or data. The processing module 810 and the transceiver module 820 may be coupled to the storage unit. For example, the processing unit 810 may read the instructions (the code or the program) and/or the data in the storage unit, to implement a corresponding method. The foregoing units may be disposed independently, or may be partially or completely integrated.

In some possible implementations, the communication apparatus 800 can correspondingly implement behaviors and functions of the relay node in the foregoing method embodiments. For example, the communication apparatus 800 may be a relay node, or may be a component (for example, a chip or a circuit) used in the relay node. The transceiver module 820 may be configured to perform all receiving or sending operations performed by the relay node in the embodiment shown in FIG. 2, for example, S201 and S202 in the embodiment shown in FIG. 2, and/or configured to support another process of the technology described in this specification. The processing module 810 is configured to perform all operations, other than the receiving and sending operations, performed by the relay node in the embodiment shown in FIG. 2, and/or configured to support another process of the technology described in this specification.

In some embodiments, the transceiver module 820 is configured to receive first indication information from a network device, where the first indication information indicates one or more access beams used by a first node in a first time unit, the one or more access beams are used for receiving and/or sending on an access link, and the access link is a communication link between the first node and a terminal or a next-hop node; and the processing module 810 is configured to control the transceiver module 820 to send and/or receive a signal in the first time unit based on the access beam indicated by the first indication information.

In a possible implementation, the first time unit includes a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit.

In a possible implementation, the first time unit includes a first time subunit and a second time subunit, the first time subunit is used for uplink receiving on the access link, the second time subunit is used for downlink sending on the access link, and the first indication information indicates a third access beam corresponding to the first time subunit and the second time subunit.

In a possible implementation, the first time unit is used for uplink receiving on the access link, and the first indication information indicates a fourth access beam that corresponds to the first time unit and that is used for uplink receiving.

In a possible implementation, the first time unit is used for downlink sending on the access link, and the first indication information indicates a fifth access beam that corresponds to the first time unit and that is used for downlink sending.

In a possible implementation, the first indication information further indicates that the one or more access beams that are in the first time unit or one or more access beams that are in one or more time subunits included in the first time unit and that are used by the first node are silent.

In a possible implementation, if the first time unit includes a flexible symbol, the transceiver module 820 is further configured to ignore the first indication information on the flexible symbol.

In a possible implementation, the transceiver module 820 is further configured to:
receive or send one or more signals on the access link through the one or more access beams, where the plurality of signals or channels are in a one-to-one correspondence with the plurality of access beams.

In a possible implementation, the signal includes one or more of the following signals, or the signal includes one or more of the following channels:
a synchronization signal block, a physical broadcast channel block, a physical downlink control channel for scheduling a system information block, a physical downlink shared channel for scheduling a system information block, a channel state information reference signal, or a tracking reference signal.

In a possible implementation, the signal is a downlink signal, and an access beam corresponding to the downlink signal is used for downlink sending on the access link; or the signal is an uplink signal, and an access beam corresponding to the uplink signal is used for uplink receiving on the access link.

In a possible implementation, a priority of the one-to-one correspondence between the plurality of signals and the plurality of access beams is higher than a priority of the first indication information.

In a possible implementation, the transceiver module 820 is further configured to send first information to the network device, where the first information indicates beam information of the first node, and the beam information includes one or more of the following information:
an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

In a possible implementation, the communication apparatus includes a plurality of beam groups, a first beam group in the plurality of beam groups includes P beams, a second beam group in the plurality of beam groups includes Q beams, the P beams have a first beam width, the Q beams have a second beam width, P is an integer greater than or equal to 1, and Q is an integer greater than or equal to 1; and
the first indication information indicates the first node to perform receiving or sending on the access link in the first time unit through a first beam having the first beam width or a second beam having the second beam width; and
the transceiver module 820 is specifically configured to send and/or receive a signal in the first time unit based on the first beam or the second beam indicated by the first indication information.

It should be understood that, in this embodiment of this application, the processing module 810 may be implemented as a processor or a processor-related circuit component, and the transceiver module 820 may be implemented as a transceiver or a transceiver-related circuit component, or a communication interface.

In some possible implementations, the communication apparatus 800 can correspondingly implement behaviors and functions of the network device in the method embodiments. For example, the communication apparatus 800 may be a base station, or may be a component (for example, a chip or a circuit) used in the base station. The transceiver module 820 may be configured to perform all receiving or sending operations performed by the network device in the embodiment shown in FIG. 2, for example, S201 and S202 in the embodiment shown in FIG. 2, and/or configured to support another process of the technology described in this specification. The processing module 810 is configured to perform all operations, other than the receiving and sending operations, performed by the network device in the embodiment shown in FIG. 2, and/or configured to support another process of the technology described in this specification.

In some embodiments, the processing module 810 is configured to generate first indication information, where the first indication information indicates one or more access beams used by a first node in a first time unit, the one or more access beams are used for receiving or sending on an access link, and the access link is a communication link between the first node and a terminal or a next-hop node; and the transceiver module 820 is configured to send the first indication information to the first node.

In a possible implementation, the first time unit includes a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit.

In a possible implementation, the first time unit includes a first time subunit and a second time subunit, the first time subunit is used for uplink receiving on the access link, the second time subunit is used for downlink sending on the access link, and the first indication information indicates a third access beam corresponding to the first time subunit and the second time subunit.

In a possible implementation, the first time unit is used for uplink receiving on the access link, and the first indication information indicates a fourth access beam that corresponds to the first time unit and that is used for uplink receiving.

In a possible implementation, the first time unit is used for downlink sending on the access link, and the first indication information indicates a fifth access beam that corresponds to the first time unit and that is used for downlink sending.

In a possible implementation, the first indication information further indicates that the one or more access beams that are in the first time unit or one or more access beams that are in one or more time subunits included in the first time unit and that are used by the first node are silent.

In a possible implementation, if the first time unit includes a flexible symbol, the first indication information is invalid on the flexible symbol.

In a possible implementation, the processing module 810 is further configured to configure the first node to receive or send one or more signals on the access link through the one or more access beams, where the plurality of signals or channels are in a one-to-one correspondence with the plurality of access beams.

In a possible implementation, the signal includes one or more of the following signals, and/or the signal includes one or more of the following channels:
a synchronization signal block, a physical broadcast channel block, a physical downlink control channel for scheduling a system information block, a physical downlink shared channel for scheduling a system information block, a channel state information reference signal, or a tracking reference signal.

In a possible implementation, the signal is a downlink signal, and an access beam corresponding to the downlink signal is used for downlink sending on the access link; or the signal is an uplink signal, and an access beam corresponding to the uplink signal is used for uplink receiving on the access link.

In a possible implementation, a priority of the one-to-one correspondence between the plurality of signals and the plurality of access beams is higher than a priority of the first indication information.

In a possible implementation, the transceiver module 820 is further configured to:
receive first information from the first node, where the first information indicates beam information of the first node, and the beam information includes one or more of the following information:
an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

In a possible implementation, the first indication information indicates the first node to perform receiving or sending on the access link in the first time unit through a first beam having the first beam width or a second beam having the second beam width; and the first node includes a plurality of beam groups, a first beam group in the plurality of beam groups includes P beams, a second beam group in the plurality of beam groups has Q beams, the P beams have the first beam width, the Q beams have the second beam width, P is an integer greater than or equal to 1, and Q is an integer greater than or equal to 1.

It should be understood that, in this embodiment of this application, the processing module 810 may be implemented as a processor or a processor-related circuit component, and the transceiver module 820 may be implemented as a transceiver or a transceiver-related circuit component, or a communication interface.

FIG. 9 shows a communication apparatus 900 according to an embodiment of this application. The communication apparatus 900 may be a relay node, and can implement a function of the relay node in the method provided in embodiments of this application. Alternatively, the communication apparatus 900 may be a base station, and can implement a function of a network device in the method provided in embodiments of this application. Alternatively, the communication apparatus 900 may be an apparatus that can support a relay node in implementing a corresponding function in the method provided in embodiments of this application, or an apparatus that can support a network device in implementing a corresponding function in the method provided in embodiments of this application. The communication apparatus 900 may be a chip or a chip system. In this embodiment of this application, the chip system may include a chip, or may include a chip and another discrete component.

In terms of hardware implementation, the transceiver module 820 may be a transceiver, and the transceiver is integrated into the communication apparatus 900, to form a communication interface 910.

The communication apparatus 900 includes at least one processor 920, configured to implement or support the communication apparatus 900 in implementing the functions of the network device or the relay node in the method provided in embodiments of this application. For details, refer to detailed descriptions in the method examples. Details are not described herein again.

The communication apparatus 900 may further include at least one memory 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions and/or the data stored in the memory 930, so that the communication apparatus 900 implements a corresponding method. At least one of the at least one memory may be included in the processor.

The communication apparatus 900 may further include a communication interface 910, configured to communicate with another device by using a transmission medium, so that an apparatus in the communication apparatus 900 can communicate with the another device. For example, when the communication apparatus is a relay node, the another device is a base station; or when the communication apparatus is a base station, the another device is a relay node. The processor 920 may send and receive data through the communication interface 910. The communication interface 910 may be specifically a transceiver.

In this embodiment of this application, a specific connection medium between the communication interface 910, the processor 920, and the memory 930 is not limited. In this embodiment of this application, in FIG. 9, the memory 930, the processor 920, and the communication interface 910 are connected through a bus 940, and the bus is represented using a bold line in FIG. 9. A connection manner between other components is only schematically described, but is not used as a limitation. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor 920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

In this embodiment of this application, the memory 930 may be a non-volatile memory such as a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be noted that the communication apparatus in the foregoing embodiments may be a relay node or a circuit, or may be a chip used in the relay node or another combined device or component that has a function of the relay node. When the communication apparatus is a relay node, the transceiver module may be a transceiver, and may include an antenna, a radio frequency circuit, and the like. The processing module may be a processor, for example, a central processing unit (central processing unit, CPU). When the communication apparatus is a component that has a function of the foregoing relay node, the transceiver module may be a radio frequency unit, and the processing module may be a processor. When the communication apparatus is a chip or a chip system, the transceiver module may be an input/output interface of the chip or the chip system, and the processing module may be a processor of the chip or the chip system.

FIG. 10 is a schematic diagram of a structure of a communication apparatus according to an embodiment of this application. For ease of understanding and illustration, in FIG. 10, an example in which the communication apparatus is a base station is used. The base station may be used in the system shown in FIG. 1, may be the network device in FIG. 1, and performs a function of the network device in the method embodiments.

The communication apparatus 1000 may include a transceiver 1010, a memory 1021, and a processor 1022. The transceiver 1010 may be configured to perform, by the communication apparatus, communication, for example, configured to send or receive the foregoing indication information. The memory 1021 is coupled to the processor 1022, and may be configured to store a program and data that are necessary for implementing functions of the communication apparatus 1000. The processor 1022 is configured to support the communication apparatus 1000 in performing a corresponding function in the method, and the function may be implemented by invoking the program stored in the memory 1021.

Specifically, the transceiver 1010 may be a wireless transceiver, and may be configured to support the communication apparatus 1000 in receiving and sending signaling and/or data through a radio air interface. The transceiver 1010 may also be referred to as a transceiver unit or a communication unit. The transceiver 1010 may include one or more radio frequency units 1012 and one or more antennas 1011. The radio frequency unit, for example, a remote radio unit (remote radio unit, RRU) or an active antenna unit (active antenna unit, AAU), may be specifically configured to transmit a radio frequency signal and perform conversion between a radio frequency signal and a baseband signal. The one or more antennas may be specifically configured to radiate and receive a radio frequency signal. Optionally, the transceiver 1010 may include only the foregoing radio frequency unit. In this case, the communication apparatus 1000 may include the transceiver 1010, the memory 1021, the processor 1022, and the antenna.

The memory 1021 and the processor 1022 may be integrated or independent of each other. As shown in FIG. 10, the memory 1021 and the processor 1022 may be integrated into a control unit 1020 of the communication apparatus 1000. For example, the control unit 1020 may include a baseband unit (baseband unit, BBU) of an LTE base station, and the baseband unit may also be referred to as a digital unit (digital unit, DU). Alternatively, the control unit 1020 may include a distributed unit (distributed unit, DU) and/or a central unit (central unit, CU) in a base station in 5G and future radio access technologies. The control unit 1020 may include one or more antenna panels. The plurality of antenna panels may jointly support a radio access network (for example, an LTE network) of a single access standard, or the plurality of antenna panels may separately support radio access networks (for example, an LTE network, a 5G network, or another network) of different access standards. The memory 1021 and the processor 1022 may serve one or more antenna panels. In other words, the memory 1021 and the processor 1022 may be separately disposed on each antenna panel. Alternatively, the plurality of antenna panels may share a same memory 1021 and a same processor 1022. In addition, a necessary circuit may be disposed on each antenna panel. For example, the circuit may be configured to implement coupling between the memory 1021 and the processor 1022. The transceiver 1010, the processor 1022, and the memory 1021 may be connected by using a bus (bus) structure and/or another connection medium.

Based on the structure shown in FIG. 10, when the communication apparatus 1000 needs to send data, the processor 1022 may perform baseband processing on the to-be-sent data and output a baseband signal to the radio frequency unit, and the radio frequency unit performs radio frequency processing on the baseband signal and sends a radio frequency signal in an electromagnetic wave form through the antenna. When data is sent to the communication apparatus 1000, the radio frequency unit receives the radio frequency signal through the antenna, converts the radio frequency signal into a baseband signal, and outputs the baseband signal to the processor 1022. The processor 1022 converts the baseband signal into data, and processes the data.

Based on the structure shown in FIG. 10, the transceiver 1010 may be configured to perform the foregoing steps performed by the transceiver module 820, and/or the processor 1022 may be configured to invoke instructions in the memory 1021, to perform the steps performed by the processing module 810.

An embodiment of this application further provides a communication system. Specifically, the communication system includes a relay node and a network device, or may further include a plurality of relay nodes and a plurality of network devices. For example, the communication system includes a relay node and a network device that are configured to implement related functions in the embodiment shown in FIG. 2.

The network device is configured to implement functions related to the base station part in the embodiment shown in FIG. 2. The relay node is configured to implement functions related to the relay node in the embodiment shown in FIG. 2. For details, refer to the related descriptions in the method embodiments. Details are not described herein again.

An embodiment of this application further provides a computer-readable storage medium including instructions. When the instructions are run on a computer, the computer is enabled to perform the method performed by the network device in the embodiment shown in FIG. 2; or when the instructions are run on a computer, the computer is enabled to perform the method performed by the relay node in the embodiment shown in FIG. 2.

An embodiment of this application further provides a computer program product including instructions. When the instructions are run on a computer, the computer is enabled to perform the method performed by the network device in the embodiment shown in FIG. 2; or when the instructions are run on a computer, the computer is enabled to perform the method performed by the relay node in the embodiment shown in FIG. 2.

An embodiment of this application provides a chip system. The chip system includes a processor, and may further include a memory, configured to implement a function of the relay node or the network device in the foregoing method, or configured to implement a function of the relay node or the network device in the foregoing method. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam management method, comprising:
receiving, by a first node, first indication information from a network device, wherein the first indication information indicates one or more access beams used by the first node in a first time unit, the one or more access beams are used for receiving and/or sending on an access link, and the access link is a communication link between the first node and a terminal or a next-hop node; and
sending and/or receiving, by the first node, a signal in the first time unit based on the access beam indicated by the first indication information.

2. The method according to claim 1, wherein the first time unit comprises a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit.

3. The method according to claim 1, wherein the first time unit comprises a first time subunit and a second time subunit, the first time subunit is used for uplink receiving on the access link, the second time subunit is used for downlink sending on the access link, and the first indication information indicates a third access beam corresponding to the first time subunit and the second time subunit.

4. The method according to claim 1, wherein the first time unit is used for uplink receiving on the access link, and the first indication information indicates a fourth access beam that corresponds to the first time unit and that is used for uplink receiving.

5. The method according to claim 1, wherein the first time unit is used for downlink sending on the access link, and the first indication information indicates a fifth access beam that corresponds to the first time unit and that is used for downlink sending.

6. The method according to claim 1, wherein the first indication information further indicates that the one or more access beams used in the first time unit or one or more access beams used in one or more time subunits comprised in the first time unit are silent.

7. The method according to any one of claims 1 to 5, wherein the method further comprises:
if the first time unit comprises a flexible symbol, ignoring, by the first node, the first indication information on the flexible symbol.

8. The method according to any one of claims 1 to 7, wherein the method further comprises:
receiving or sending, by the first node, one or more signals on the access link through the one or more access beams, wherein the plurality of signals are in a one-to-one correspondence with the plurality of access beams.

9. The method according to claim 8, wherein the signal comprises one or more of the following signals:
a synchronization signal block, a physical broadcast channel block, a physical downlink control channel for scheduling a system information block, a physical downlink shared channel for scheduling a system information block, a channel state information reference signal, or a tracking reference signal.

10. The method according to claim 8, wherein the signal is a downlink signal, and an access beam corresponding to the downlink signal is used for downlink sending on the access link; or
the signal is an uplink signal, and an access beam corresponding to the uplink signal is used for uplink receiving on the access link.

11. The method according to any one of claims 8 to 10, wherein a priority of the one-to-one correspondence between the plurality of signals and the plurality of access beams is higher than a priority of the first indication information.

12. The method according to any one of claims 1 to 11, wherein the method further comprises:
sending, by the first node, first information to the network device, wherein the first information indicates beam information of the first node, and the beam information comprises one or more of the following information:
an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

13. The method according to claim 12, wherein
the first node comprises a plurality of beam groups, a first beam group in the plurality of beam groups comprises P beams, a second beam group in the plurality of beam groups comprises Q beams, the P beams have a first beam width, the Q beams have a second beam width, P is an integer greater than or equal to 1, and Q is an integer greater than or equal to 1; and
the first indication information indicates the first node to perform receiving or sending on the access link in the first time unit through a first beam having the first beam width or a second beam having the second beam width, and the method further comprises:
sending and/or receiving, by the first node, a signal in the first time unit based on the first beam or the second beam indicated by the first indication information.

14. A beam management method, comprising:
generating, by a network device, first indication information, wherein the first indication information indicates one or more access beams used by a first node in a first time unit, the one or more access beams are used for receiving or sending on an access link, and the access link is a communication link between the first node and a terminal or a next-hop node; and
sending, by the network device, the first indication information to the first node.

15. The method according to claim 14, wherein the first time unit comprises a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit.

16. The method according to claim 14, wherein the first time unit comprises a first time subunit and a second time subunit, the first time subunit is used for uplink receiving on the access link, the second time subunit is used for downlink sending on the access link, and the first indication information indicates a third access beam corresponding to the first time subunit and the second time subunit.

17. The method according to claim 14, wherein the first time unit is used for uplink receiving on the access link, and the first indication information indicates a fourth access beam that corresponds to the first time unit and that is used for uplink receiving.

18. The method according to claim 14, wherein the first time unit is used for downlink sending on the access link, and the first indication information indicates a fifth access beam that corresponds to the first time unit and that is used for downlink sending.

19. The method according to claim 14, wherein the first indication information further indicates that the one or more access beams used in the first time unit or one or more access beams used in one or more time subunits comprised in the first time unit are silent.

20. The method according to any one of claims 14 to 19, wherein if the first time unit comprises a flexible symbol, the first indication information is invalid on the flexible symbol.

21. The method according to any one of claims 14 to 20, wherein the method further comprises:
configuring, by the network device, the first node to receive or send one or more signals on the access link through the one or more access beams, wherein the plurality of signals are in a one-to-one correspondence with the plurality of access beams.

22. The method according to claim 21, wherein the signal comprises one or more of the following signals or channels:
a synchronization signal block, a physical broadcast channel block, a physical downlink control channel for scheduling a system information block, a physical downlink shared channel for scheduling a system information block, a channel state information reference signal, or a tracking reference signal.

23. The method according to claim 21, wherein the signal is a downlink signal, and an access beam corresponding to the downlink signal is used for downlink sending on the access link; or
the signal is an uplink signal, and an access beam corresponding to the uplink signal is used for uplink receiving on the access link.

24. The method according to any one of claims 21 to 23, wherein a priority of the one-to-one correspondence between the plurality of signals and the plurality of access beams is higher than a priority of the first indication information.

25. The method according to any one of claims 14 to 24, wherein the method further comprises:
receiving, by the network device, first information from the first node, wherein the first information indicates beam information of the first node, and the beam information comprises one or more of the following information:
an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

26. The method according to claim 25, wherein the first indication information indicates the first node to perform receiving or sending on the access link in the first time unit through a first beam having a first beam width or a second beam having a second beam width; and the first node comprises a plurality of beam groups, a first beam group in the plurality of beam groups comprises P beams, a second beam group in the plurality of beam groups has Q beams, the P beams have the first beam width, the Q beams have the second beam width, P is an integer greater than or equal to 1, and Q is an integer greater than or equal to 1.

27. A communication apparatus, comprising a transceiver module and a processing module, wherein
the transceiver module is configured to receive first indication information from a network device, wherein the first indication information indicates one or more access beams used by a first node in a first time unit, the one or more access beams are used for receiving and/or sending on an access link, and the access link is a communication link between the first node and a terminal or a next-hop node; and
the processing module is configured to control the transceiver module to send and/or receive a signal in the first time unit based on the access beam indicated by the first indication information.

28. The communication apparatus according to claim 27, wherein the first time unit comprises a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit.

29. The communication apparatus according to claim 27, wherein the first time unit comprises a first time subunit and a second time subunit, the first time subunit is used for uplink receiving on the access link, the second time subunit is used for downlink sending on the access link, and the first indication information indicates a third access beam corresponding to the first time subunit and the second time subunit.

30. The communication apparatus according to claim 27, wherein the first time unit is used for uplink receiving on the access link, and the first indication information indicates a fourth access beam that corresponds to the first time unit and that is used for uplink receiving.

31. The communication apparatus according to claim 27, wherein the first time unit is used for downlink sending on the access link, and the first indication information indicates a fifth access beam that corresponds to the first time unit and that is used for downlink sending.

32. The communication apparatus according to claim 27, wherein the first indication information further indicates that the one or more access beams that are in the first time unit or one or more access beams that are in one or more time subunits comprised in the first time unit and that are used by the first node are silent.

33. The communication apparatus according to any one of claims 27 to 32, wherein if the first time unit comprises a flexible symbol, the transceiver module is further configured to ignore the first indication information on the flexible symbol.

34. The communication apparatus according to any one of claims 27 to 33, wherein the transceiver module is further configured to:
receive or send one or more signals on the access link through the one or more access beams, wherein the plurality of signals are in a one-to-one correspondence with the plurality of access beams.

35. The communication apparatus according to claim 34, wherein the signal comprises one or more of the following signals:
a synchronization signal block, a physical broadcast channel block, a physical downlink control channel for scheduling a system information block, a physical downlink shared channel for scheduling a system information block, a channel state information reference signal, or a tracking reference signal.

36. The communication apparatus according to claim 34, wherein the signal is a downlink signal, and an access beam corresponding to the downlink signal is used for downlink sending on the access link; or
the signal is an uplink signal, and an access beam corresponding to the uplink signal is used for uplink receiving on the access link.

37. The communication apparatus according to any one of claims 34 to 36, wherein a priority of the one-to-one correspondence between the plurality of signals and the plurality of access beams is higher than a priority of the first indication information.

38. The communication apparatus according to any one of claims 27 to 37, wherein the transceiver module is further configured to:
send first information to the network device, wherein the first information indicates beam information of the first node, and the beam information comprises one or more of the following information:
an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

39. The communication apparatus according to claim 38, wherein the communication apparatus comprises a plurality of beam groups, a first beam group in the plurality of beam groups comprises P beams, a second beam group in the plurality of beam groups comprises Q beams, the P beams have a first beam width, the Q beams have a second beam width, P is an integer greater than or equal to 1, and Q is an integer greater than or equal to 1;
the first indication information indicates the first node to perform receiving or sending on the access link in the first time unit through a first beam having the first beam width or a second beam having the second beam width; and
the transceiver module is specifically configured to send and/or receive a signal in the first time unit based on the first beam or the second beam indicated by the first indication information.

40. A communication apparatus, comprising a transceiver module and a processing module, wherein
the processing module is configured to generate first indication information, wherein the first indication information indicates one or more access beams used by a first node in a first time unit, the one or more access beams are used for receiving or sending on an access link, and the access link is a communication link between the first node and a terminal or a next-hop node; and
the transceiver module is configured to send the first indication information to the first node.

41. The communication apparatus according to claim 40, wherein the first time unit comprises a first time subunit and a second time subunit, the first time subunit is used for uplink receiving on the access link, the second time subunit is used for downlink sending on the access link, and the first indication information indicates a first access beam corresponding to the first time subunit and indicates a second access beam corresponding to the second time subunit.

42. The communication apparatus according to claim 40, wherein the first time unit comprises a first time subunit and a second time subunit, the first time subunit is used for uplink receiving on the access link, the second time subunit is used for downlink sending on the access link, and the first indication information indicates a third access beam corresponding to the first time subunit and the second time subunit.

43. The communication apparatus according to claim 40, wherein the first time unit is used for uplink receiving on the access link, and the first indication information indicates a fourth access beam that corresponds to the first time unit and that is used for uplink receiving.

44. The communication apparatus according to claim 40, wherein the first time unit is used for downlink sending on the access link, and the first indication information indicates a fifth access beam that corresponds to the first time unit and that is used for downlink sending.

45. The communication apparatus according to claim 40, wherein the first indication information further indicates that the one or more access beams that are in the first time unit or one or more access beams that are in one or more time subunits comprised in the first time unit and that are used by the first node are silent.

46. The communication apparatus according to any one of claims 40 to 45, wherein if the first time unit comprises a flexible symbol, the first indication information is invalid on the flexible symbol.

47. The communication apparatus according to any one of claims 40 to 46, wherein the processing module is further configured to configure the first node to receive or send one or more signals on the access link through the one or more access beams, wherein the plurality of signals are in a one-to-one correspondence with the plurality of access beams.

48. The communication apparatus according to claim 47, wherein the signal comprises one or more of the following signals or channels:
a synchronization signal block, a physical broadcast channel block, a physical downlink control channel for scheduling a system information block, a physical downlink shared channel for scheduling a system information block, a channel state information reference signal, or a tracking reference signal.

49. The communication apparatus according to claim 47, wherein the signal is a downlink signal, and an access beam corresponding to the downlink signal is used for downlink sending on the access link; or
the signal is an uplink signal, and an access beam corresponding to the uplink signal is used for uplink receiving on the access link.

50. The communication apparatus according to any one of claims 47 to 49, wherein a priority of the one-to-one correspondence between the plurality of signals and the plurality of access beams is higher than a priority of the first indication information.

51. The communication apparatus according to any one of claims 40 to 50, wherein the transceiver module is further configured to:
receive first information from the first node, wherein the first information indicates beam information of the first node, and the beam information comprises one or more of the following information:
an index of a beam, an index of a beam group, an index of a beam in a beam group, an index of a beam subgroup in a beam group, an index of a beam in a beam subgroup in a beam group, a quantity of beams, a quantity of beam groups, a quantity of beams in a beam group, a quantity of beam subgroups in a beam group, or a quantity of beams in a beam subgroup in a beam group.

52. The communication apparatus according to claim 51, wherein the first indication information indicates the first node to perform receiving or sending on the access link in the first time unit through a first beam having a first beam width or a second beam having a second beam width; and the first node comprises a plurality of beam groups, a first beam group in the plurality of beam groups comprises P beams, a second beam group in the plurality of beam groups has Q beams, the P beams have the first beam width, the Q beams have the second beam width, P is an integer greater than or equal to 1, and Q is an integer greater than or equal to 1.

53. A communication apparatus, wherein the communication apparatus comprises a processor and a memory, the memory is configured to store a computer program, and the processor is configured to execute the computer program stored in the memory, to enable the apparatus to perform the method according to any one of claims 1 to 13 or 14 to 26.

54. A communication apparatus, wherein the communication apparatus comprises a processor and a communication interface, the communication interface is configured to input and/or output information, and the processor is configured to execute a computer program, to enable the apparatus to perform the method according to any one of claims 1 to 13 or 14 to 26.

55. A communication apparatus, wherein the communication apparatus comprises a processor, a memory, and a transceiver, the transceiver is configured to input and/or output information, the memory is configured to store a computer program, and the processor is configured to execute the computer program stored in the memory, to enable the apparatus to perform the method according to any one of claims 1 to 13 or 14 to 26.

56. A communication system, wherein the communication system comprises the communication apparatus according to any one of claims 27 to 39 and the communication apparatus according to any one of claims 40 to 52.

57. A computer-readable storage medium, wherein the computer-readable storage medium stores a computer program; and when the computer program is executed by a computer, the computer is enabled to perform the method according to any one of claims 1 to 13 or 14 to 26.
